# EUROPEAN PATENT APPLICATION

(11) **EP 3 413 212 A1**
(43) Date of publication of application: **12.12.2018**
(21) Application number: 17897210.5
(22) Date of filing: 30.06.2017
(51) Int. Cl.: G06F 17/30

(54) **RANDOM FOREST MODEL TRAINING METHOD, ELECTRONIC APPARATUS AND STORAGE MEDIUM**

(30) Priority: 13.03.2017 CN 201710147698
(71) Applicant: Ping An Technology (Shenzhen) Co., Ltd., Shenzhen, Guangdong 518000 (CN)
(72) Inventor: JIN, Ge, Shenzhen Guangdong 518000 (CN); XU, Liang, Shenzhen Guangdong 518000 (CN); XIAO, Jing, Shenzhen Guangdong 518000 (CN)
(74) Representative: Inal, Aysegul Seda
(86) International application number: PCT/CN2017/091362
(87) International publication number: WO 2018/166113

(57) **Abstract**

The disclosure relates to a method of training a random forest model, an electronic device and a storage medium. The method of training the random forest model includes: analyzing, by a system of controlling model training, whether model training conditions are met or not; if the model training conditions are met, determining whether reconstructive training needs to be carried out on the random forest model or not; if the reconstructive training needs to be carried out on the random forest model, carrying out the reconstructive training on the random forest model by using sample data; if the reconstructive training does not need to be carried out on the random forest model, carrying out corrective training on the random forest model by using the sample data. The disclosure can reduce the number of times of training on the random forest model, relieve the system burden and improve the system efficiency.

## Description

### CLAIM OF PRIORITY

This application is based on the Paris Convention and claims priority to China Patent Application No. CN2017101476983, filed on March 13, 2017 and entitled "Method of Training Random Forest Model and System of Controlling Model Training", which is hereby incorporated by reference in its entirety.

### TECHNICAL FIELD

The disclosure relates to the technical field of machine learning, and more particularly relates to a method of training a random forest model, an electronic device and a storage medium.

### BACKGROUND

During machine learning, a random forest is a classifier for training and forecasting sample data by using multiple trees, which includes multiple decision-making trees. A decision-making tree is a process for classifying data through a series of rules. At the present, more and more enterprises, which supply online businesses (such as remote insuring, remote claim settlement and online financial management), adopt the random forest to carry out classification label identification on users in a business system so as to precisely recommend businesses to the users and handle the businesses for the users according to identification results.

However, when new data may serve as the sample data for iterative training to improve the precision of model identification, the old sample data and the new sample data are simultaneously used to carry out reconstructive training on a random forest model according to an existing technical solution. The reconstructive training is the one needing to change the decision-making tree structure in the random forest model. Such a training solution is generally to carry out the reconstructive training once the new sample data are available, which leads to a large number of times of training; and particularly under a condition that data of the online businesses change frequently, too frequent training will occur, and lead to overburden of a system, thus affecting the efficiency of an online business system and effective development of the online businesses.

### SUMMARY

The disclosure aims to provide a method of training a random forest model, an electronic device and a medium, and aims at reducing the number of times of training on the random forest model, reducing the system burden and improving the system efficiency.

On the first aspect of the disclosure, a method of training a random forest model is provided. The method of training the random forest model includes:
S1, analyzing, by a system of controlling model training, whether model training conditions are met or not;
S2, if the model training conditions are met, determining whether reconstructive training needs to be carried out on the random forest model or not;
S3, if the reconstructive training needs to be carried out on the random forest model, carrying out the reconstructive training on the random forest model by using sample data;
S4, if the reconstructive training does not need to be carried out on the random forest model, carrying out corrective training on the random forest model by using the sample data.

On the second aspect of the disclosure, an electronic device is provided, including processing equipment, storage equipment and a system of controlling model training. The system of controlling model training is stored in the storage equipment, and includes at least one computer readable instruction. The at least one computer readable instruction may be executed by the processing equipment to implement the following operations:
S1, analyzing, by the system of controlling model training, whether model training conditions are met or not;
S2, if the model training conditions are met, determining whether reconstructive training needs to be carried out on the random forest model or not;
S3, if the reconstructive training needs to be carried out on the random forest model, carrying out the reconstructive training on the random forest model by using sample data;
S4, if the reconstructive training does not need to be carried out on the random forest model, carrying out corrective training on the random forest model by using the sample data.

On the third aspect of the disclosure, a computer readable storage medium is provided, which stores at least one computer readable instruction executed by processing equipment to implement the following operations:
S1, analyzing, by a system of controlling model training, whether model training conditions are met or not;
S2, if the model training conditions are met, determining whether reconstructive training needs to be carried out on the random forest model or not;
S3, if the reconstructive training needs to be carried out on the random forest model, carrying out the reconstructive training on the random forest model by using sample data;
S4, if the reconstructive training does not need to be carried out on the random forest model, carrying out corrective training on the random forest model by using the sample data.

The disclosure has the beneficial effects that: when using the random forest model to classify users of online businesses, the disclosure may set or limit the conditions for training the random forest model so as to reduce the number of times of training of the model without affecting development of the online businesses; in addition, the type of model training may be further selected, that is, when the model training conditions are met, the disclosure further confirms whether the reconstructive training or the corrective training is carried out on the random forest model at the present; and by selective training on the random forest model, the system burden may be greatly relieved, the efficiency of an online business system is improved, and effective development of the online businesses is facilitated.

### BRIEF DESCRIPTION OF THE ACCOMPANYING DRAWINGS

FIG. 1 is an application environment schematic diagram of a preferred embodiment of a method of training a random forest model of the disclosure;
FIG. 2 is a flowchart of a preferred embodiment of a method of training a random forest model of the disclosure;
FIG. 3 is a refined flowchart of the step S4 as shown in FIG. 2;
FIG. 4 is a schematic diagram of a structure of a preferred embodiment of a system of controlling model training of the disclosure;
FIG. 5 is a schematic diagram of a structure of a second training module as shown in FIG. 4.

### DETAILED DESCRIPTION OF ILLUSTRATED EMBODIMENTS

A description will be made below to the principle and the features of the disclosure in conjunction with accompanying drawings, and examples taken herein are merely explanative of the disclosure, but not intended to limit the scope of the disclosure.

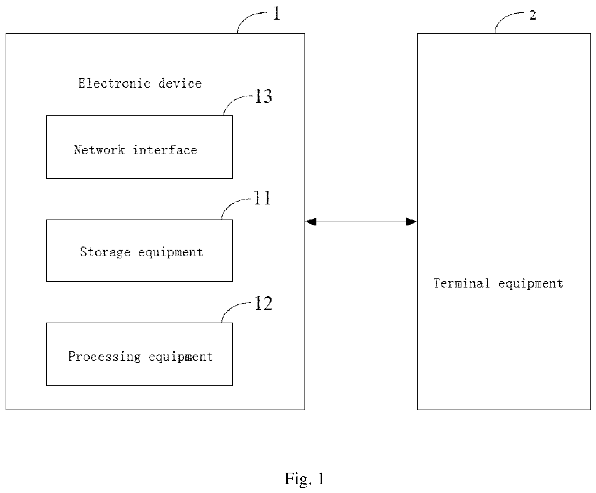

With reference to FIG. 1, which is an application environment schematic diagram of a preferred embodiment of a method of training a random forest model of the disclosure, this application environment schematic diagram includes an electronic device 1 and terminal equipment 2. The electronic device 1 may implement data interaction with the terminal equipment 2 through an appropriate technology such as a network and a near field communication technology.

The terminal equipment 2 includes, but limited to, any electronic product capable of implementing human-machine interaction with a user by means of a keyboard, a mouse, a remote controller, a touch panel or sound control equipment and the like, for example, a personal computer, a flat computer, a smart phone, a Personal Digital Assistant (PDA), a game machine, an Internet Protocol Television (IPTV), intelligent wearable equipment and the like.

The electronic device 1 is equipment capable of automatically calculating a value and/or processing information according to a preset or pre-stored instruction. The electronic device 1 may be a computer, a single network server, a server group consisting of multiple network servers, or a cloud computing-based cloud consisting of a large number of hosts or network servers, wherein as one of distributed computations, cloud computing is a super virtual computer consisting of a group of loosely-coupled computer sets.

In this embodiment, the electronic device 1 may include, but not limited to, storage equipment 11, processing equipment 12 and a network interface 13 which are connected with one another through a system bus in a communicating manner. It should be noted that FIG. 1 only shows the electronic device 1 having assemblies from 11 to 13, but it should be understood that not all the assemblies shown are required to be implemented, and more or fewer assemblies may be implemented instead.

Further, the storage equipment 11 includes an internal memory and at least one type of readable storage medium. The internal memory provides a buffer for operation of the electronic device 1; the readable storage medium may be a non-volatile storage medium, such as a flash memory, a hard disk, a multimedia card and a card type memory. In some embodiments, the readable storage medium may be an internal storage unit of the electronic device 1, for example, a hard disk of the electronic device 1; in some other embodiments, the non-volatile storage medium also may be external storage equipment of the electronic device 1, for example, a plug-in type hard disk, a Smart Media Card (SMC), a Secure Digital (SD) card, a Flash Card (FC) and the like which are equipped on the electronic device 1. In this embodiment, the readable storage medium of the storage equipment 11 is generally used for storing an operating system and all types of application software which are installed in the electronic device 1, for example, a program code of a system 10 of controlling model training in a preferred embodiment of the application and the like. In addition, the storage equipment 11 may be also used for temporarily storing all types of data which have been output or are about to be output.

The processing equipment 12 in some embodiments may include one or a plurality of micro processors, micro controllers, digital processors and the like. The processing equipment 12 is generally used for controlling operation of the electronic device 1, for example, executing control and processing related to data interaction and communication with the terminal equipment 2 and the like. In this embodiment, the processing equipment 12 is used for operating the program code stored in the storage equipment 11 or processing data, for example, operating the system 10 of controlling model training and the like.

The network interface 13 may include a wireless network interface or a wired network interface. The network interface 13 is generally used for establishing communication connection between the electronic device 1 and other sets of electronic equipment. In this embodiment, the network interface 13 is mainly used for connecting the electronic device 1 with one or multiple sets of terminal equipment 2 to establish a data transmission channel and communication connection between the electronic device 1 and one or multiple sets of terminal equipment 2.

The system 10 of controlling model training includes at least one computer readable instruction stored in the storage equipment 11. The at least one computer readable instruction may be executed by the processing equipment 12 to realize methods of training a random forest model of all embodiments of the disclosure. As mentioned later, the at least one computer readable instruction may be divided into different logic modules according to different functions realized by all its parts.

In one embodiment, the system 10 of controlling model training is executed by the processing equipment 12 to implement the following operations: the system of controlling model training analyzes whether model training conditions are met or not; if the model training conditions are met, it determines whether reconstructive training needs to be carried out on the random forest model or not; if the reconstructive training needs to be carried out on the random forest model, the reconstructive training is carried out on the random forest model by using sample data; if the reconstructive training does not need to be carried out on the random forest model, corrective training is carried out on the random forest model by using the sample data.

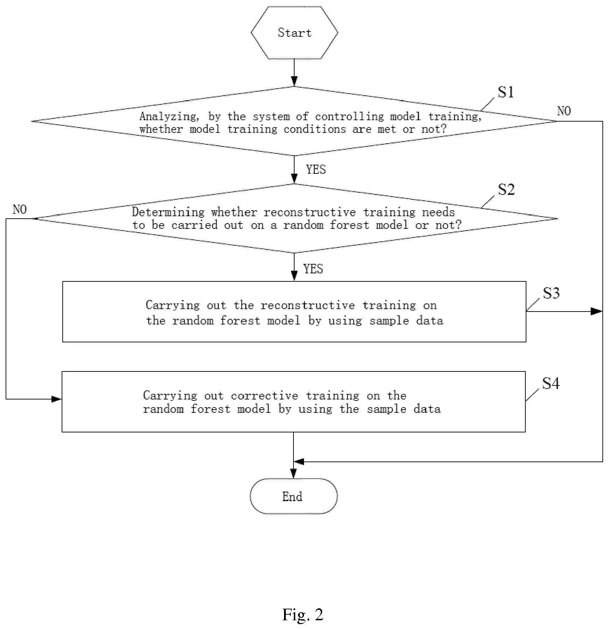

As shown in FIG. 2, which is a flowchart of a preferred embodiment of a method of training a random forest model of the disclosure, in this embodiment, a method of training a random forest model includes, but not limited to, the steps as shown in the flowchart; in addition, some of the steps as shown in the flowchart may be omitted, and the sequence of the steps may be changed. The method of training the random forest model includes:
Step S1, a system of controlling model training analyzes whether model training conditions are met or not;
the model training includes reconstructive training and corrective training. The model training conditions are set on the system of controlling model training, and may be artificially flexibly set or adopt preset default conditions in the system of controlling model training.

Wherein, for online businesses, the model training conditions are judged on the basis of user business data (for example, the model training is carried out when the user business data reach a creation amount), or on the basis of an actual demand (for example, a worker of the system of controlling model training will send a model training instruction to the system of controlling model training according to the actual demand so as to carry out the model training), or a timer sets a time interval, namely after one model training is ended, another model training is carried out on the random forest model every preset time, and the like.

Preferably, the step that whether the model training conditions are met or not is analyzed includes:
a first number (for example, the first number is a number of business data of 200 users) of newly added user business data within a time period from the moment that the former model training is ended to the current moment in a business system is obtained, if the first number is greater than a first preset threshold value, it determines that the model training conditions are met (the reconstructive training or the corrective training may be carried out), and if the first number is less than or equal to the first preset threshold value, it determines that the model training conditions are not met (the reconstructive training or the corrective training may not be carried out); or
whether the model training instruction is received or not is detected in real time or regularly (for example, every 10 minutes), for example: the worker of the system of controlling model training logs into the system, and then clicks or triggers a "model training" button on a model training operation interface after entering the model training operation interface so as to send the model training instruction; when the system of controlling model training receives the model training instruction, the model training conditions are met (the reconstructive training or the corrective training may be carried out), and if the system does not receive the model training instruction, the model training conditions are not met (the reconstructive training or the corrective training may not be carried out).

Step S2, if the model training conditions are met, it determines whether the reconstructive training needs to be carried out on the random forest model;
if the model training conditions are met, it further determines whether the reconstructive training or the corrective training is carried out on the random forest model, wherein determination whether the reconstructive training needs to be carried out on the random forest model or not may be implemented on the basis of the number of the user business data between two reconstructive trainings (for example, when the number of the user business data between two reconstructive trainings is greater than a certain number, the reconstructive training is carried out), or on the basis of an actual demand (for example, the worker of the system of controlling model training will send the reconstructive training instruction to the system of controlling model training according to the actual demand so as to carry out the reconstructive training), and the like.

Preferably, the step that it determines whether the reconstructive training needs to be carried out or not on the random forest model includes:
a second number (for example, the second number is a number of business data of 500 users) of newly added user business data within a time period from the moment that the former reconstructive training is ended to the current moment in a business system is obtained, if the second number is greater than a second preset threshold value, it determines that the reconstructive training needs to be carried out on the random forest model, and if the second number is greater than the first preset threshold value and less than the second threshold value, the corrective training is carried out on the random forest model; or
an inquiry request whether the reconstructive training needs to be carried out on the random forest model or not is sent to a preset terminal (such as a mobile phone, a flat computer, a computer and other applicable electronic terminals), for example: after entering the model training operation interface and sending the "model training" instruction, the system of controlling model training may further send information for inquiring whether the reconstructive training is carried out or not to the preset terminal; if a YES instruction fed back by the terminal based on the inquiry request is received, it determines that the reconstructive training needs to be carried out on the random forest model, and if a NO instruction fed back by the terminal based on the inquiry request is received or no feedback of the terminal is received within a preset time period (for example 3 minutes), the corrective training is carried out on the random forest model.

Step S3, if the reconstructive training needs to be carried out on the random forest model, the reconstructive training is carried out on the random forest model by using sample data;

Step S4, if the reconstructive training does not need to be carried out on the random forest model, the corrective training is carried out on the random forest model by using the sample data.

In this embodiment, the sample data include old sample data and newly added sample data. The reconstructive training includes deterministic training for variables of the random forest model and deterministic training for variable coefficients of the random forest model, and the corrective training only includes the deterministic training for the variable coefficients of the random forest model, wherein for example, the variables of the random forest model include the type of an algorithm, the number of decision-making trees, the maximum depth of each decision-making tree, various data of leaf nodes of the decision-making trees and the like. System resources used in the reconstructive training are more than those used in the corrective training.

Compared with the prior art, when using the random forest model to classify the users of the online businesses, this embodiment may set or limit the conditions for training the random forest model so as to reduce the number of times of the model training without affecting development of the online businesses; in addition, the type of model training may be further selected, that is, when the model training conditions are met, the embodiment further confirms whether the reconstructive training or the corrective training is carried out on the random forest model at the present; and by selective training on the random forest model, the system burden may be greatly relieved, the efficiency of an online business system is improved, and effective development of the online businesses is facilitated.

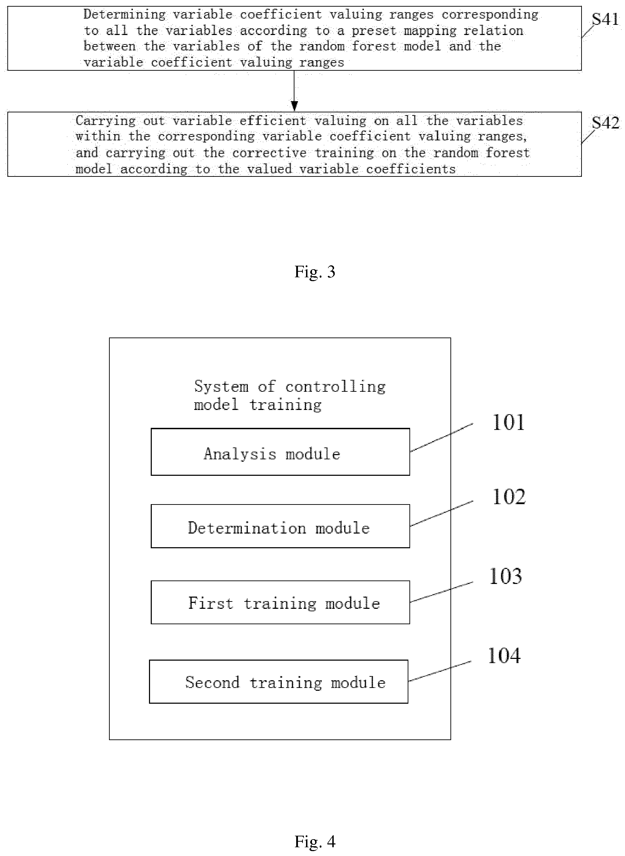

In one preferred embodiment, as shown in FIG. 3, on the basis of the embodiment of FIG. 2, the step S4 includes:
S41, variable coefficient valuing ranges corresponding to all variables are determined according to a preset mapping relation between the variables of the random forest model and the variable coefficient valuing ranges;
S42, variable coefficient valuing is carried out on all the variables within the corresponding variable coefficient valuing ranges, and the corrective training is carried out on the random forest model according to the valued variable coefficients.

In this embodiment, the variables of the random forest model and the variable coefficient valuing ranges may be pre-subjected to dependence mapping, and their dependence mapping relation is stored (for example, the mapping relation is stored by means of a list). Before the training is carried out on the random forest model, and after the variables of the random forest model are determined, the stored dependence mapping relation is obtained so as to further obtain the corresponding variable coefficient valuing ranges, and then the variable coefficients of the variables may be only valued within the obtained valuing ranges to guarantee the accuracy of the model training, effectively increase the speed of the model training, and avoid valuing training on the coefficients of all the variables of the random forest model from a total numerical range.

With reference to FIG. 4, which is a functional module diagram of a preferred embodiment of a system 10 of controlling model training of the disclosure, in this embodiment, the system 10 of controlling model training may be partitioned into one or multiple modules; the one or multiple modules are stored in a memory, and are executed by one or more processors to implement the disclosure. For example, as shown in FIG. 4, the system 10 of controlling model training may be partitioned into a detection module 21, an identification module 22, a copy module 23, an installation module 24 and a starting module 25. The modules of the disclosure are a series of computer program instruction segments capable of completing specific functions, and are more suitable for describing an execution process of the system 10 of controlling model training in an electronic device than a program, including
an analysis module 101, which is used for analyzing whether model training conditions are met or not;
the model training includes reconstructive training and corrective training. The model training conditions are set on the system 10 of controlling model training, and may be artificially flexibly set or adopt preset default conditions in the system of controlling model training.

Wherein, for online businesses, the model training conditions are judged on the basis of user business data (for example, the model training is carried out when the user business data reach a creation amount), or on the basis of an actual demand (for example, a worker of the system of controlling model training will send a model training instruction to the system of controlling model training according to the actual demand so as to carry out the model training), or a timer sets a time interval, namely after one model training is ended, the model training is carried out on the random forest model every preset time, and the like.

Preferably, the analysis module 101 is specifically used for obtaining a first number (for example, the first number is a number of business data of 200 users) of newly added user business data within a time period from the moment that the former model training is ended to the current moment in a business system, determining that the model training conditions are met (the reconstructive training or the corrective training may be carried out) if the first number is greater than a first preset threshold value, and determining that the model training conditions are not met (the reconstructive training or the corrective training may not be carried out) if the first number is less than or equal to the first preset threshold value; or
detecting whether the model training instruction is received or not in real time or regularly (for example, every 10 minutes), for example: the worker of the system of controlling model training logs into the system, and then clicks or triggers a "model training" button on a model training operation interface after entering the model training operation interface so as to send the model training instruction; when the system of controlling model training receives the model training instruction, the model training conditions are met (the reconstructive training or the corrective training may be carried out), and if the system does not receive the model training instruction, the model training conditions are not met (the reconstructive training or the corrective training may not be carried out).
a determination module 102, which is used for determining whether the reconstructive training needs to be carried out on the random forest model or not if the model training conditions are met;
if the model training conditions are met, further determining whether the reconstructive training or the corrective training is carried out on the random forest model, wherein determination whether the reconstructive training needs to be carried out on the random forest model or not may be implemented on the basis of the number of the user business data between two reconstructive trainings (for example, when the number of the user business data between two reconstructive trainings is greater than a certain number, the reconstructive training is carried out), or on the basis of an actual demand (for example, the worker of the system of controlling model training will send the reconstructive training instruction to the system of controlling model training according to the actual demand so as to carry out the reconstructive training), and the like.

Preferably, the determination module 102 is specifically used for obtaining a second number (for example, the second number is a number of business data of 500 users) of newly added user business data within a time period from the moment that the former reconstructive training is ended to the current moment in a business system, determining that the reconstructive training needs to be carried out on the random forest model if the second number is greater than a second preset threshold value, and determining that the corrective training is carried out on the random forest model if the second number is greater than the first preset threshold value and less than the second threshold value; or
sending an inquiry request whether the reconstructive training needs to be carried out on the random forest model or not to a preset terminal (such as a mobile phone, a flat computer, a computer and other applicable electronic terminals), for example: after entering the model training operation interface and sending the "model training" instruction, the system of controlling model training may further send information for inquiring whether the reconstructive training is carried out or not to the preset terminal; if a YES instruction fed back by the terminal based on the inquiry request is received, it determines that the reconstructive training needs to be carried out on the random forest model, and if a NO instruction fed back by the terminal based on the inquiry request is received or no feedback of the terminal is received within a preset time period (for example 3 minutes), the corrective training is carried out on the random forest model.
a first training module 103, which is used for carrying out the reconstructive training on the random forest model by using sample data if the reconstructive training needs to be carried out on the random forest model;
a second training module 104, which is used for carrying out the corrective training on the random forest model by using the sample data if the reconstructive training does not need to be carried out on the random forest model.

In this embodiment, the sample data include old sample data and newly added sample data. The reconstructive training includes deterministic training for variables of the random forest model and deterministic training for variable coefficients of the random forest model, and the corrective training only includes the deterministic training for the variable coefficients of the random forest model, wherein for example, the variables of the random forest model include the type of an algorithm, the number of decision-making trees, the maximum depth of each decision-making tree, various data of leaf nodes of the decision-making trees and the like. System resources used in the reconstructive training are more than those used in the corrective training.

Compared with the prior art, when using the random forest model to classify the users of the online businesses, this embodiment may set or limit the conditions for training the random forest model so as to reduce the number of times of model training without affecting development of the online businesses; in addition, the type of model training may be further selected, that is, when the model training conditions are met, the embodiment further confirms whether the reconstructive training or the corrective training is carried out on the random forest model at the present; and by selective training on the random forest model, the system burden may be greatly relieved, the efficiency of an online business system is improved, and effective development of the online businesses is facilitated.

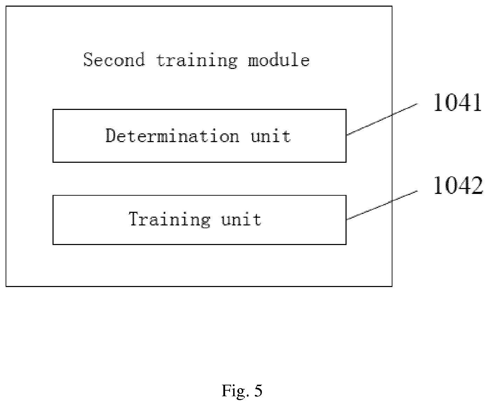

In one preferred embodiment, as shown in FIG. 5, on the basis of the embodiment of FIG. 4, the second training module 104 includes:
a determination unit 1041, which is used for determining variable coefficient valuing ranges corresponding to all variable according to a preset mapping relation between the variables of the random forest model and the variable coefficient valuing ranges;
a training unit 1042, which is used for carrying out variable coefficient valuing on all the variables within the corresponding variable coefficient valuing ranges, and carrying out the corrective training on the random forest model according to the valued variable coefficients.

In this embodiment, the variables of the random forest model and the variable coefficient valuing ranges may be pre-subjected to dependence mapping, and their dependence mapping relation is stored (for example, the mapping relation is stored by means of a list). Before the training is carried out on the random forest model, and after the variables of the random forest model are determined, the stored dependence mapping relation is obtained so as to further obtain the corresponding variable coefficient valuing ranges, and then the variable coefficients of the variables may be only valued within the obtained valuing ranges to guarantee the accuracy of the model training, effectively increase the speed of the model training, and avoid valuing training on the coefficients of all the variables of the random forest model from a total numerical range.

The above-mentioned embodiments are only preferred embodiments of the disclosure, but not intended to limit the disclosure. Any modifications, equivalent replacements, improvements and the like that are made without departing from the spirit and the principle of the disclosure shall all fall within the scope of protection of the disclosure.

## Claims

1. A method of training a random forest model, comprising:
S1, analyzing, by a system of controlling model training, whether model training conditions are met or not;
S2, if the model training conditions are met, determining whether reconstructive training needs to be carried out on the random forest model or not;
S3, if the reconstructive training needs to be carried out on the random forest model, carrying out the reconstructive training on the random forest model by using sample data;
S4, if the reconstructive training does not need to be carried out on the random forest model, carrying out corrective training on the random forest model by using the sample data.

2. The method of training the random forest model of claim 1, wherein the step S1 comprises:
obtaining a first number of newly added user business data within a time period from the moment that the former model training is ended to the current moment in a business system, and if the first number is greater than a first preset threshold value, determining that the model training conditions are met; or
detecting whether a model training instruction is received or not in real time or regularly, and if the model training instruction is received, determining that the model training conditions are met.

3. The method of training the random forest model of claim 1, wherein the Step S2 comprises:
obtaining a second number of newly added user business data within a time period from the moment that the former reconstructive training is ended to the current moment in a business system, and if the second number is greater than a second preset threshold value, determining that the reconstructive training needs to be carried out on the random forest model; or
sending an inquiry request whether the reconstructive training needs to be carried out on the random forest model or not to a preset terminal, and if a YES instruction fed back by the terminal based on the inquiry request is received, determining that the reconstructive training needs to be carried out on the random forest model.

4. The method of training the random forest model of claim 1, wherein the reconstructive training comprises deterministic training for variables of the random forest model and deterministic training for variable coefficients of the random forest model, and the corrective training comprises the deterministic training for the variable coefficients of the random forest model.

5. The method of training the random forest model of claim 4, wherein the step S1 comprises:
obtaining a first number of newly added user business data within a time period from the moment that the former model training is ended to the current moment in a business system, and if the first number is greater than a first preset threshold value, determining that the model training conditions are met; or
detecting whether a model training instruction is received or not in real time or regularly, and if the model training instruction is received, determining that the model training conditions are met.

6. The method of training the random forest model of claim 4, wherein the step S2 comprises:
obtaining a second number of newly added user business data within a time period from the moment that the former reconstructive training is ended to the current moment in a business system, and if the second number is greater than a second preset threshold value, determining that the reconstructive training needs to be carried out on the random forest model; or
sending an inquiry request whether the reconstructive training needs to be carried out on the random forest model or not to a preset terminal, and if a YES instruction fed back by the terminal based on the inquiry request is received, determining that the reconstructive training needs to be carried out on the random forest model.

7. The method of training the random forest model of claim 4, wherein the step S4 comprises:
S41, determining variable coefficient valuing ranges corresponding to all variable according to a preset mapping relation between variables of the random forest model and the variable coefficient valuing ranges;
S42, carrying out variable coefficient valuing on all the variables within the corresponding variable coefficient valuing ranges, and carrying out the corrective training on the random forest model according to the valued variable coefficients.

8. An electronic device, comprising processing equipment, storage equipment and a system of controlling model training, wherein the system of controlling model training is stored in the storage equipment, and comprises at least one computer readable instruction which may be executed by the processing equipment to implement the following operations:
S1, analyzing, by the system of controlling model training, whether model training conditions are met or not;
S2, if the model training conditions are met, determining whether reconstructive training needs to be carried out on the random forest model or not;
S3, if the reconstructive training needs to be carried out on the random forest model, carrying out the reconstructive training on the random forest model by using sample data;
S4, if the reconstructive training does not need to be carried out on the random forest model, carrying out corrective training on the random forest model by using the sample data.

9. The electronic device of claim 8, wherein the step S1 comprises:
obtaining a first number of newly added user business data within a time period from the moment that the former model training is ended to the current moment in a business system, and if the first number is greater than a first preset threshold value, determining that the model training conditions are met; or
detecting whether a model training instruction is received or not in real time or regularly, and if the model training instruction is received, determining that the model training conditions are met.

10. The electronic device of claim 8, wherein the Step S2 comprises:
obtaining a second number of newly added user business data within a time period from the moment that the former reconstructive training is ended to the current moment in a business system, and if the second number is greater than a second preset threshold value, determining that the reconstructive training needs to be carried out on the random forest model; or
sending an inquiry request whether the reconstructive training needs to be carried out on the random forest model or not to a preset terminal, and if a YES instruction fed back by the terminal based on the inquiry request is received, determining that the reconstructive training needs to be carried out on the random forest model.

11. The electronic device of claim 8, wherein the reconstructive training comprises deterministic training for variables of the random forest model and deterministic training for variable coefficients of the random forest model, and the corrective training comprises the deterministic training for the variable coefficients of the random forest model.

12. The electronic device of claim 11, wherein the step S1 comprises:
obtaining a first number of newly added user business data within a time period from the moment that the former model training is ended to the current moment in a business system, and if the first number is greater than a first preset threshold value, determining that the model training conditions are met; or
detecting whether a model training instruction is received or not in real time or regularly, and if the model training instruction is received, determining that the model training conditions are met.

13. The electronic device of claim 11, wherein the step S2 comprises:
obtaining a second number of newly added user business data within a time period from the moment that the former reconstructive training is ended to the current moment in a business system, and if the second number is greater than a second preset threshold value, determining that the reconstructive training needs to be carried out on the random forest model; or
sending an inquiry request whether the reconstructive training needs to be carried out on the random forest model or not to a preset terminal, and if a YES instruction fed back by the terminal based on the inquiry request is received, determining that the reconstructive training needs to be carried out on the random forest model.

14. The electronic device of claim 11, wherein the step S4 comprises:
S41, determining variable coefficient valuing ranges corresponding to all variable according to a preset mapping relation between variables of the random forest model and the variable coefficient valuing ranges;
S42, carrying out variable coefficient valuing on all the variables within the corresponding variable coefficient valuing ranges, and carrying out the corrective training on the random forest model according to the valued variable coefficients.

15. A computer readable storage medium, which is stored with at least one computer readable instruction executed by processing equipment to implement the following operations:
S1, analyzing, by a system of controlling model training, whether model training conditions are met or not;
S2, if the model training conditions are met, determining whether reconstructive training needs to be carried out on the random forest model or not;
S3, if the reconstructive training needs to be carried out on the random forest model, carrying out the reconstructive training on the random forest model by using sample data;
S4, if the reconstructive training does not need to be carried out on the random forest model, carrying out corrective training on the random forest model by using the sample data.

16. The storage medium of claim 15, wherein the step S1 comprises:
obtaining a first number of newly added user business data within a time period from the moment that the former model training is ended to the current moment in a business system, and if the first number is greater than a first preset threshold value, determining that the model training conditions are met; or
detecting whether a model training instruction is received or not in real time or regularly, and if the model training instruction is received, determining that the model training conditions are met.

17. The storage medium of claim 15, wherein the Step S2 comprises:
obtaining a second number of newly added user business data within a time period from the moment that the former reconstructive training is ended to the current moment in a business system, and if the second number is greater than a second preset threshold value, determining that the reconstructive training needs to be carried out on the random forest model; or
sending an inquiry request whether the reconstructive training needs to be carried out on the random forest model or not to a preset terminal, and if a YES instruction fed back by the terminal based on the inquiry request is received, determining that the reconstructive training needs to be carried out on the random forest model.

18. The storage medium of claim 15, wherein the reconstructive training comprises deterministic training for variables of the random forest model and deterministic training for variable coefficients of the random forest model, and the corrective training comprises the deterministic training for the variable coefficients of the random forest model.

19. The storage medium of claim 18, wherein the step S1 comprises:
obtaining a first number of newly added user business data within a time period from the moment that the former model training is ended to the current moment in a business system, and if the first number is greater than a first preset threshold value, determining that the model training conditions are met; or
detecting whether a model training instruction is received or not in real time or regularly, and if the model training instruction is received, determining that the model training conditions are met.

20. The storage medium of claim 18, wherein the step S4 comprises:
S41, determining variable coefficient valuing ranges corresponding to all variable according to a preset mapping relation between variables of the random forest model and the variable coefficient valuing ranges;
S42, carrying out variable coefficient valuing on all the variables within the corresponding variable coefficient valuing ranges, and carrying out the corrective training on the random forest model according to the valued variable coefficients.
